(19) Europäisches Patentamt
European Patent Office
Office européen des brevets

(11) Publication number: **0 008 703**
**B1**

(12) # EUROPEAN PATENT SPECIFICATION

(45) Date of publication of patent specification: **06.07.83**

(51) Int. Cl.³: **C 08 L 23/00**, C 08 K 5/20, C 08 K 7/14, C 08 L 23/04, C 08 L 23/10

(21) Application number: **79102918.4**

(22) Date of filing: **11.08.79**

(54) **Polyolefines reinforced with glass fibres and their use.**

(30) Priority: **01.09.78 IT 2724378**
**26.07.79 IT 2466879**

(43) Date of publication of application:
**19.03.80 Bulletin 80/6**

(45) Publication of the grant of the patent:
**06.07.83 Bulletin 83/27**

(84) Designated Contracting States:
**BE DE FR GB IT NL**

(56) References cited:
**DE - A - 2 633 501**
**FR - A - 2 318 720**
**GB - A - 1 094 439**
**US - A - 3 853 808**

(73) Proprietor: **Montedison S.p.A.**
**Patents & Licensing Dept. Foro Buonaparte, 31**
**P.O. Box 10528**
**I-20121 Milan (IT)**

(72) Inventor: **Marzola, Roberto**
**34, Via Mario Azzi**
**Ferrara (IT)**
Inventor: **Garagnani, Enea, Dr.**
**261, Via dei Mille**
**Piumazzo, (Modena) (IT)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

# Polyolefines reinforced with glass fibres and their use

The present invention concerns polyolefins reinforced with glass fibres, which have improved mechanical characteristics.

More particularly, this invention has for its object the process for preparing blends of polyolefines with glass fibres, containing an additive or coupling agent capable of promoting the adhesion of the fibre to the polymer during the processing phase of the same.

It is known that, due to their apolar character, polyolefines are not suited for being reinforced in an effective way with inorganic fibres.

In order to overcome such a drawback it had been suggested to modify the olefinic polymer by grafting onto the hydrocarbon chain monomers having polar groups.

According to British Specification n° 1,094,439 glass reinforced thermoplastic compositions are obtained by incorporating glass fibres in polypropylene, at least 0.2% by weight of which has been modified by reaction with an ethylenically unsaturated dicarboxylic acid or anhydride (or esters, or amides thereof), such as maleamic acid. This method is cumbersome and unpractical from the economic stand point, since it involves the additional operation of modifying the polymer by a reaction in a separate step.

According to French Patent N° 2,318,720 moulding thermoplastic materials are obtained by mixing at high temperature polyethylene or polypropylene with glass fibres in the presence of a diamine containing up to 20 Carbon atoms and an unsaturated dicarboxylic acid such as maleic acid, or the corresponding anhydride.

Said method has many drawbacks, such as the necessity of using relatively high amounts of amine and acid, the unsuited high colouring of the end products, especially when amines containing more than six carbon atoms are used, and the not completely satisfactory mechanical properties of the products, especially as regards the value of creep under flexion.

It has now, unexpectedly, been found, and this forms the object of this invention, that it is possible to obtain composite materials with excellent mechanical characteristics, without the above mentioned disadvantages, by mixing at temperatures comprised between 200°C and the temperature of decomposition of the polymer a crystalline polyolefine with glass fibres and a bis-maleamic acid of the general formula:

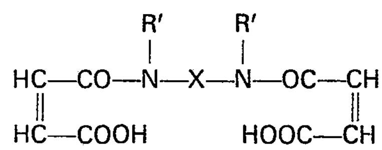

wherein X is a $(CHR)_n$ group, in which $n$ is an integer from 2 to 18, and R is hydrogen or an alkyl with 1—6 carbon atoms, or X is a cycloaliphatic or aromatic bivalent group even having several nuclei, or a heterocyclic group; R′ is hydrogen, the two R′ together optionally being a $(CHR)_n$ group when X is $(CHR)_n$.

Representative and preferred bis-maleamic acids are:

N.N′-hexamethylene-bis-maleammic acid;
N.N′-ethylene-bis-maleammic acid;
N.N′-trimethylene-bis-maleammic acid;
N.N′-dodecamethylene-bis-maleammic acid;
N.N′-piperazine-bis-maleammic acid;
N.N′-m-phenylene-bis-maleammic acid;
N.N′-3.3′-(trans-stilbene-5.5′-sodiumsulphonate)-bis-maleammic acid;
N.N′-4.4′-(diphenyl-ether)-bis-maleammic acid;
N.N′-4.4′-(diphenylmethane)-bis-maleammic acid;
N.N′-isophorone-bis-maleammic acid (*);
N.N′-2.5-dimethylene-norbornane-bis-maleammic acid.

(*) See Table 2 (foot note).

The preparation of the composite materials is carried out by heating the blend of polyolefine, glass fibres and bis-maleammic acid without that there be necessary the use of peroxides or other substances capable of supplying free radicals.

The bis-maleammic acid is used in quantities that vary from 0.5 to 5% by weight with respect to the polyolefine.

The term crystalline polyolefines includes also the crystalline copolymers of the alpha-olefines with each other or with ethylene. More particularly, by this term are comprised products containing up to about 20% by weight of polymerized ethylene, obtained by polymerization of propylene in the presence of ethylene added at the beginning or during the polymerization of propylene.

As already mentioned, the method of preparation of the composite materials of this invention

consists in preparing a mixture of polymer, glass fibres and bis-maleammic acid and in then heating the "dry blend" thus obtained at a temperature that in general is comprised between 200°C and the decomposition temperature of the polymer, and that coincides practically with the forming temperature of the polymer.

In the case of polypropylene, the forming temperature is comprised between 200°C and 290°C.

In practice, the preparation of the composite material of this invention or of the corresponding manufactured article is carried out by subjecting the mixtures containing the polymer, the glass fibre and the bis-maleammic acid or a granulate, obtained from such mixtures by granulation according to known methods, to forming according to known technologies.

The fibre, in general, constitutes from 10% to 50% by weight of the polyolefine/fibre blend. As glass fibres there are used fibres that have preliminarily been subjected to a finishing treatment with a silane and with a film former having in the molten state a surface tension near that of the polyolefinic matrix.

As examples of such silanes there may be cited: γ-aminopropyl-trietoxy-silane, aminoethyl-trietoxy-silane, γ-aminobutyl-trietoxy-silane and γ-glycidoxy-propyltrimetoxy-silane.

The above mentioned film formers are of a polyolefinic nature: there may be used, for instance, polypropylene, polyethylene, ethylene-propylene rubbers and ethylene-propylene-diene rubbers.

Such olefinic rubbers possess a molecular weight comprised between 50.000 and 800.000, but preferably between 70.000 and 500.000, and they contain from 20% to 80% in mols of ethylene and, when unsaturated, from 0.1 to 20% in mols of a conjugated or unconjugated diene hydrocarbon such as butadiene, isoprene, 1.3-pentadiene, 1.4-pentadiene, 1.4-hexadiene, 1.5-hexadiene, 1.9-decadiene, alkenyl-norbornenes such as 5-methylene-2-norbornene and 5-vinyl-2-norbornene, norbornadienes such as 2-alkyl-2.5-norbornadienes, alkylidene-norbornenes such as 5-ethylidene-2-norbornene, cyclopentadiene and still others.

The glass fibres are treated with the silane and the film former according to anyone of the known coating techniques.

As already previously indicated, the blends of this invention allow to achieve an excellent polymer-to-fibre adhesion and, thus, the attainment of a breaking load considerably greater than that attainable without the use of the bis-maleammic acid, and this, without the need of modifying preventively the polymer or to revert to the use of peroxides. In this way, besides avoiding a costly process for preventive modification of the polymer, one also avoids all drawbacks connected with the use of sources of free radicals, such as for instance cross-linking, degrading and poor resistance of the product to aging.

As crystalline polypropylene, polybutene, poly-4-methylpentane-1 there are preferably used polymers with a high percentage of polymer with an isotactic structure. More particularly there is used polypropylene with an isotacticity index greater than 90%.

In the following examples, given for purely illustrative and not limiting purposes, the glass fibres used for the purpose have a coating based on γ-aminopropyl-trietoxy-silane and on a terpolymer consisting of 67% of ethylene, 30% of propylene and 3% of 5-ethylidene-2-norbornene, said percentages being expressed by weight.

Examples 1—4

1400 g of polypropylene in the form of powder, having an isotacticity index of 95, density = 0.90 g/cc and a melt-index L = 10 g/10 min. (ASTM—1238 standards) were mixed through for 5 minutes with the quantities of N.N'-hexamethylene-bis-maleammic acid indicated on Table 1 and with an anti-oxidant formulation, in a powder mixer, under a nitrogen atmosphere.

This anti-oxidant formulation comprises 0.2% of dilaurylthiodipropionate, 0.1% of tetra[3-(3.5-di-t-butyl-4-hydroxyphenyl)propionate] of pentaerythritol, 0.2% Ca stearate, and 0.1% of 2.6-di-t-butyl-p-cresol, the percentages by weight being referred to the polypropylene.

For comparative purposes, in the first of the 4 tests no use was made of bis-maleamine acid.

The 4 "dry blends" were extruded under a nitrogen atmosphere in a Pasquetti double-screw extruder, at 205°C, thereby obtaining a modified and stabilized granular polypropylene. To this granular product there was added 30% (on the total) of glass fibres of the "chopped strands" type, 6 mm long, and then the whole mass was extruded in the Pasquetti double-screw extruder at 205°C, thereby obtaining a reinforced polypropylene.

The test pieces for the physical-mechanical characterisation were prepared on a V 160/72 type injection molding press built by GBF of Bresso (Italy), and which operated under the following conditions:

— temperature of extruder body and head 250°C

— temperature of die 25°C

— injection time for test pieces for tensile test 20 sec.

— complete cycle for the test pieces for tensile test 70 sec.

— injection time for the test pieces for bending tests, impact tests and HDT 80 sec.

— complete cycle for the test pieces for bending tests, impact tests and HDT 100 sec.

For the test pieces molded in the 4 tests, Table 1 reports the values for the tensile breaking load (ASTM D—638 standards), for the elastic modulus under bending (ASTM D—790 standards), for the Izod resilience with notch at −20°C (ASTM D—256), for the HDT (heat distortion temperature) (ASTM D—648) and for the creep in bending test carried out on the central part of the test piece for tensile test (distance between supports = 4 cm) at 80°C and at 120°C for 8 hours under a load of 100 kg/sq.cm.

TABLE 1

| Example n° | 1 | 2 | 3 | 4 |
|---|---|---|---|---|
| Polypropylene, g | 1400 | 1400 | 1400 | 1400 |
| Glass fibres, g | 600 | 600 | 600 | 600 |
| N.N'-hexamethylene-bis-maleammic acid, g | — | 7 | 14 | 28 |
| Tensile breaking load Kg/sq.cm | 403 | 935 | 1065 | 924 |
| Flexural elastic modulus Kg/sq.cm | 54750 | 58100 | 57200 | 55200 |
| Izod resilience with notch at −20°C, Kg/cm/cm | 8.62 | 16.3 | 10.9 | 9.16 |
| HDT °C | 133.3 | 148 | 148 | 144.5 |
| Deformation in mm resulting from creep tests under bending at 80°C | 1 | 0.42 | 0.39 | 0.47 |
| at 120°C | — | 0.55 | 0.57 | — |

Examples 5—8

1400 g of a polypropylene powder, having an isotacticity index equal to 95, density = 0.90 g/cc and a melt index L = 10 g/10 min. (ASTM D—1238 standards) were mixed through for 5 minutes in a powder mixer, under a nitrogen atmosphere, with 600 g of glass fibres of the 'chopped strands" type of 6 mm length and with the quantities of bis-maleammic acids reported on Table 2, together with the same anti-oxidant formulation used in examples 1—4.

The four "dry blends" thus obtained were injection molded and characterized like in examples 1—4. The results have been recorded on Table 2.

TABLE 2

| Example n° | 5 | 6 | 7 | 8 |
|---|---|---|---|---|
| Polypropylene g | 1400 | 1400 | 1400 | 1400 |
| Glass fibres g | 600 | 600 | 600 | 600 |
| N.N'-hexamethylene-bis-maleammic acid g | 7 | 14 | — | — |
| N.N'-dodecylamethylene-bis-maleammic acid | — | — | 7 | — |
| N.N'-isophorone-bis-maleammic acid (*) | — | — | — | 7 |
| Tensile breaking load Kg/sq.cm | 943 | 939 | 940 | 970 |
| Flexural elastic modulus Kg/sq.cm | 56370 | 58900 | 63000 | 57250 |
| Izod resilience with notch at −20°C Kg/cm/cm | 19.8 | 17.2 | 13 | 13 |
| HDT °C | 152 | 150.5 | 149 | 149 |
| Deformation in mm resulting from creep tests under bending at 80°C. | — | — | 10.39 | 0.41 |
| at 120°C | — | — | 0.62 | 0.62 |

(*) Trivial name of the bis-maleammic acid derived from 1-aminomethyl-5-amino-1.3.3-trimethylcyclohexane and having the formula

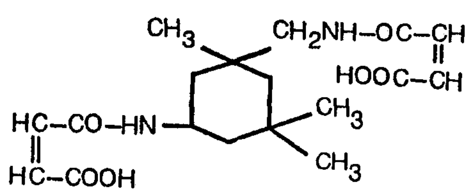

Example 9

1400 g of high density polyethylene powder, having a density of 0.962 g/cc and a melt index E = 5.5 g/10 minutes (ASTM D—1238 standards) were mixed through for 5 minutes in a powder mixer and in a nitrogen atmosphere, together with 600 g of glass fibres of the "chopped strands" type of 6 mm length, with 7 g of N.N'-hexamethylene-bis-maleammic acid and with an anti-oxidant formulation comprising 0.03% of n-octadecyl 3-(4-hydroxy-3.5-di-t-butylphenyl)propionate, 0.02% of 2.6-di-t-butyl-p-cresol, 0.04% of glyceryl monostearate and 0.1% of Ca stearate, the percentages being referred to polyethylene.

The "dry blend" thus obtained was injection molded and characterized like in examples 1—4.

The tensile breaking load (ASTM D—638 standards) was 950 kg/sq.cm, while the flexural elastic modulus (ASTM D—790) was 63650 Kg-sq.cm.

The Izod resiliencey with notch −20°C (ASTM D—256) was 30 Kg cm/cm (partially broken test piece), while the HDT (according to ASTM D—648) was 123°C.

**Claims**

1. Process for preparing composite materials which consists in heating a mixture comprising:
(a) 50—90% by weight of a crystalline polyolefine.
(b) 50—100% by weight of glass fibres
(c) from 0.5 to 5% by weight on the polyolefine of a bis-maleamic acid of the general formula:

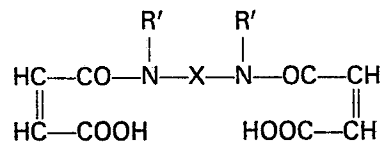

wherein:

X = $(CHR)_n$ group, or cycloaliphatic, aromatic bivalent group, optionally having several nuclei, or heterocyclic group

n = integer from 2 to 18

R = H, or $C_1$—$C_6$ alkyl group,

R' = H, the two R's optionally being together a $(CHR)_n$ group when X = $(CHR)_n$,

said heating being carried out at a temperature between 200°C and the decomposition temperature of the polyolefine.

2. Process according to claim 1, wherein the bis-maleamic acid is N,N'-hexamethylene-bis-maleamic acid.

3. Process according to claim 1, wherein the bis-maleamic acid is N,N'-dodecamethylene-bis-maleamic acid.

4. Process according to claim 1, wherein the bis-maleamic acid is N,N'-isophorone-bis-maleamic acid.

**Patentansprüche**

1. Verfahren zur Herstellung von Verbundmaterial, darin bestehend, dass man eine Mischung aus:
(a) 50—90% Gewicht einer kristallinen Polyolephine,
(b) 50—10% Gewicht Glassfasern, und
(c) von 0.5 bis 5% Gewicht, mit Bezug auf die Polyolephine, einer bis-maleamischen Säure der allgemeinen Formel:

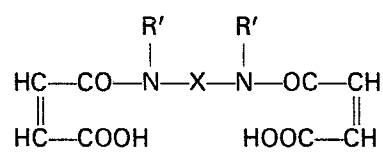

in der:

X = einer $(CHR)_n$-Gruppe, oder einer zykloaliphatischen, aromatischen zweiwertigen Gruppe ist, die wahlweise mehrere Kerne besitzen kann; oder einer heterozyklischen Gruppe; und worin

n = eine ganze Zahl von 1 bis 18 ist;

R = H, oder einer Alkylgruppe mit von 1 bis 6 Kohlenatomen;

R' = H, wobei die zwei R' fähig sind, zusammen, eine $(CHR)_n$-Gruppe zu bilden wenn:

X = $(CHR)_n$,

erwärmt, wobei die erwähnte Erhitzung (Erwärmung) bei einer Temperatur zwischen 200°C und der Zersetzungstemperatur der Polyolefine durchgeführt wird.

2. Verfahren laut Anspruch 1, dadurchgekennzeichnet, dass die bis-maleamische Säure N,N'-hexamethylen-bis-maleamische Säure ist.

3. Verfahren laut Anspruch 1, dadurch gekennzeichnet, dass die bis-maleamische Säure N,N'-dodekamethylen-bis-maleamische Säure ist.

4. Verfahren laut Anspruch 1, dadurch gekennzeichnet, dass die bis-maleamische Säure N,N'-isophoron-bis-maleamische Säure ist.

**Revendications**

1. Procédé pour la préparation de matériaux composites consistant dans le réchauffage d'un mélange comprennant
(a) 50—90% en poids de polyoléphine crystalline,
(b) 50—10% en poids de fibres en verre,
(c) de 0.5 à 5% en poids sur la polyoléphine, d'un acide bis-maléamique, ayant formule générale:

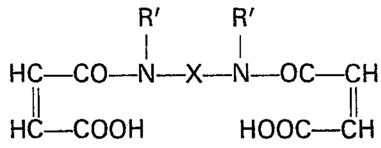

ou:

X = groupe $(CHR)_n$, ou un groupe cycloalyphatique, aromatique bivalent, optionellement possédant plusieurs noyaux; ou un groupe hétérocyclique où

n = un nombre entier compris entre 2 et 18;

R = H, ou un groupe alkylique avec 1 à 6 atomes carboniques;

R′ = H, le deux R′ étant capable de former ensemble un groupe $(CHR)_n$ lorsque

X = $(CHR)_n$,

dite réchauffage étant conduit à une température comprise entre 200°C et la température de décomposition de la polyoléphine.

2. Procédé selon la revendication 1, dont l'acide bis-maléamique est l'acide N,N′-hexaméthylène-bis-maleamique.

3. Procédé selon la revendication 1, dont l'acide bis-maléamique est l'acide N,N′-dodecaméthylène-bis-maléamique.

4. Procédé selon la revendication 1, charactérisée en ce que l'acide bis-maléamique est l'acide N,N′-isophoron-bis-maléamique.